# EUROPÄISCHE PATENTSCHRIFT

(11) **EP 3 017 890 B1**
(45) Veröffentlichungstag und Bekanntmachung des Hinweises auf die Patenterteilung: **09.06.2021**
(21) Anmeldenummer: 14192106.4
(22) Anmeldetag: 06.11.2014
(51) Int. Cl.: B21C 37/09, B21C 37/15, C25D 5/02, C25D 5/08, F16L 9/16, F16L 9/18

(54) **Verfahren zur Herstellung eines mehrwandigen Rohres**
Method of manufacturing a multiple-wall pipe
Méthode de fabrication d'un tuyau multi-paroi

(43) Veröffentlichungstag der Anmeldung: 11.05.2016
(60) Teilanmeldung: 21160940.9
(73) Patentinhaber: TI Automotive (Heidelberg) GmbH, 69123 Heidelberg (DE)
(72) Erfinder: Meier, Sebastian, 76646 Bruchsal (DE)
(74) Vertreter: Rohmann, Michael

(56) Entgegenhaltungen:
- EP-A1- 1 488 865
- WO-A2-2004/037454
- GB-A- 1 591 907
- US-A- 4 661 230

## Beschreibung

Die Erfindung betrifft ein Verfahren zur Herstellung von mehrwandigen Rohren. Ein Verfahren mit den Merkmalen des Oberbegriffs des Anspruchs 1 ist z.B. aus der GB-A-1591907 bekannt.

Die Herstellung der eingangs genannten Rohre ist grundsätzlich bekannt. Hierbei wird ein Stahlband ein- oder beidseitig mit einer Lotschicht aus Kupfer beschichtet. Das Stahlband bildet eine Stahlausgangsschicht und das Kupfer eine bzw. zwei Lotausgangsschichten eines Metallbandes. Das Metallband bzw. Abschnitte des Metallbandes, werden danach mehrfach aufgerollt. In einem letzten Schritt wird mittels Erhitzen des mehrwandigen Rohres das Kupfer aufgeschmolzen, wodurch die aufgerollten Wände des Rohres miteinander verlötet werden und so eine hochwertige stoffschlüssige Verbindung ergeben. Solcherart hergestellte Rohre sind einerseits sehr robust und andererseits verhältnismäßig wirtschaftlich herzustellen.

Ein wesentliches Problem bei diesem Verfahren stellt die Beschichtung des Stahlbandes mit der Lotschicht z. B. dar. Denn für eine großflächige Beschichtung, wie im Falle von Stahlbändern, kommt überwiegend das Verfahren des Elektroplattierens (Galvanotechnik genannt) in Betracht. Eine ausreichende Haftung der Lotschicht auf Stahl wird unter wirtschaftlichen Gesichtspunkten jedoch einzig und allein durch Zugabe von Zyanid in den Elektrolytbädern der Galvanotechnik erreicht. Zwar gab es in der Vergangenheit eine Reihe an Entwicklungen, um die Haftung der Lotschicht zu verbessern und um hierdurch die Zugabe des hochgiftigen Zyanids in die Elektrolytbäder zu vermeiden. Eine jede dieser Entwicklungen ist aber mit derartigen Nachteilen verbunden, dass sich in der Gesamtabwägung das bekannte Verfahren der Zyanidzugabe bis heute durchgesetzt hat. Diese Nachteile sind beispielweise eine nur unzureichende Haftung, eine zu große Empfindlichkeit der Elektrolytbäder gegenüber von Verunreinigungen, die Zugabe von gefährlich starken Oxidationsmitteln oder viel zu umständliche Verfahrensschritte. Alle diese Nachteile führen entweder zu einer mangelnden Qualität des Rohres (insbesondere die mangelnde Haftung der Lotschicht) bzw. zu unwirtschaftlichen Verfahren.

Der Erfindung liegt damit das Problem zugrunde, ein zyanidfreies Verfahren anzugeben, bei welchem die vorstehend genannten Nachteile vermieden werden. Insbesondere liegt der Erfindung das technische Problem zugrunde, ein sehr wirtschaftliches und zyanidfreies Verfahren anzugeben, welches gleichzeitig eine gute Haftung der Lotschicht auf dem Stahlband gewährleistet.

Zur Lösung dieses technischen Problems lehrt die Erfindung ein Verfahren zur Herstellung von mehrwandigen Rohren mit den Merkmalen des unabhängigen Anspruchs 1.

Der Begriff "Metallband" bezieht sich auf alle Herstellungsstufen. Demzufolge fällt unter diesen Begriff bereits das bloße Stahlband als auch das Band jedes weiteren Beschichtungsschrittes. Das Stahlband weist vorzugsweise eine Breite von 250 mm bis 1.500 mm und besonders vorzugsweise von 700 mm bis 1.100 mm auf. Vorteilhafterweise ist das Stahlband ein Kaltband. Das Stahlband ist zweckmäßigerweise kaltumformbar. Das Stahlband entspricht idealerweise den Stahlsorten DC oder DX. Ganz besonders vorzugsweise besteht das Stahlband aus den Stählen DC03 oder DC04. Die Stärke des Stahlbandes und damit auch die Stärke der Stahlausgangsschicht beträgt zweckmäßigerweise 150 bis 600 µm, vorzugsweise 250 bis 420 µm und besonders vorzugsweise 300 bis 370 µm. Vor dem Aufbringen der Nickelausgangsschicht/en wird das Stahlband vorteilhafterweise gereinigt. Die Stärke der Nickelausgangsschicht beträgt erfindungsgemäß 40 bis 800 nm, vorzugsweise 60 bis 300 nm und besonders vorzugsweise 70 bis 200 nm. Die Stärke der Lotausgangsschicht hingegen beträgt bevorzugt 2 bis 12 µm, weiter bevorzugt 3 bis 8 µm und ganz besonders bevorzugt 4 bis 6 µm. Das Aufrollen der Streifen geschieht vorzugsweise mittels Walzen. Das Erhitzen geschieht gemäß einer ersten Ausführungsform mittels Strahlungsöfen (auch Muffelrohre genannt). Gemäß anderen Ausführungsformen geschieht das Erhitzen mittels Induktionsöfen oder mittels eines Anlegens eines hochfrequenten Stroms an die Rohre selber.

Der Begriff "Nickelausgangsschicht" meint sowohl reine Nickelschichten als auch Nickellegierungen. Vorzugsweise entspricht der Nickelanteil der Nickelausgangsschicht einem relativen Maximum. Besonders vorzugsweise entspricht der Nickelanteil der Nickelausgangsschicht einem absoluten Maximum. Ganz besonders vorzugsweise beträgt der Nickelanteil wenigstens 80 %.

Der Begriff "Lotausgangsschicht" umfasst Metalle und Metalllegierungen, welche zum Löten geeignet sind. Die Lotausgangsschicht weist vorzugsweise wenigstens eines der Metalle aus der Gruppe "Blei, Zinn, Zink, Silber, Kupfer" auf. Bevorzugt umfasst die wenigstens eine Lotausgangsschicht wenigstens ein Hartlot. Hartlote im Sinne der Erfindung sind Metalle mit Erweichungstemperaturen über 450° C.

Erfindungsgemäß wird bzw. werden die wenigstens eine Nickelausgangsschicht und vorzugsweise auch die wenigstens eine Lotausgangsschicht mittels Elektroplattierens aufgebracht. Zweckmäßigerweise wird beim Elektroplattieren der wenigstens einen Nickelausgangsschicht und/oder der wenigstens einen Lotausgangsschicht wenigstens ein Elektrolytbad verwendet.

Gemäß einer bevorzugten Ausführungsform wird das Elektroplattieren der wenigstens einen Nickelausgangsschicht und/oder der wenigstens einen Lotausgangsschicht in wenigstens einer Zelle mit der Möglichkeit einer konstanten Elektrolytflussgeschwindigkeit vorgenommen. Vorteilhafterweise ist die Zelle mit der Möglichkeit einer konstanten Elektrolytflussgeschwindigkeit eine Radialzelle. Gemäß einer anderen Ausführungsform ist die Zelle mit der Möglichkeit einer konstanten Elektrolytflussgeschwindigkeit eine Zelle mit beweglichen Anoden. Besonders vorzugsweise handelt es sich bei der Zelle mit beweglichen Anoden um eine sogenannte Gravitelzelle. Gemäß einer ersten Ausführungsform beschichtet die Radialzelle das Metallband nur einseitig. Gemäß einer zweiten Ausführungsform beschichtet die Gravitelzelle das Stahlband beidseitig. Vorzugsweise trägt die Gravitelzelle auf beiden Seiten des Stahlbandes eine Nickelausgangsschicht auf. Der Verwendung von wenigstens einer Zelle mit der Möglichkeit einer konstanten Elektrolytflussgeschwindigkeit liegt die Erkenntnis zugrunde, dass hierdurch eine gleichbleibende Stromdichte über die Zelle hinweg gewährleistet wird. Dies ermöglicht insbesondere eine besonders gleichmäßige Verteilung von Nickel. In der Folge sind damit sehr dünne Nickelausgangsschichten möglich.

Vorteilhafterweise wird das Elektroplattieren der wenigstens einen Lotausgangsschicht in wenigstens einer Radialzelle vorgenommen. Gemäß einer bevorzugten Ausführungsform wird das Elektroplattieren der wenigstens einen Lotausgangsschicht in wenigstens zwei Radialzellen und weiter bevorzugt in wenigstens vier Radialzellen vorgenommen. Zweckmäßigerweise liegt das Metallband einseitig auf einer Kontaktfläche auf, so dass das Elektrolytbad lediglich mit der anderen Seite des Metallbandes in Berührung kommt. Vorzugsweise wird die Kontaktfläche gebildet durch eine Kontakttrommel. Es ist bevorzugt, dass die Anoden in konstantem bzw. im Wesentlichen in konstantem Abstand zum Metallband bzw. zur Kontaktfläche bzw. zur Kontakttrommel angeordnet sind. Es ist zweckmäßig, dass der Elektrolyt auf zwei Seiten der Kontakttrommel in die Radialzelle eingeflößt wird. Idealerweise befindet sich im tiefstgelegenen Bereich der Kontakttrommel ein Elektrolytauslass. Vorzugsweise wird das Metallband über eine erste Ablenkrolle in die Radialzelle eingeführt. Es ist vorteilhaft, dass das Metallband über eine zweite Ablenkrolle aus der Radialzelle herausgeführt wird.

Es liegt im Rahmen der Erfindung, dass das Elektroplattieren der wenigstens einen Nickelausgangsschicht und/oder der wenigstens einen Lotausgangsschicht mit Hilfe von unlöslichen Anoden durchgeführt wird. Die unlöslichen Anoden weisen vorzugsweise Blei oder eine Bleilegierung auf. Die Bleilegierung enthält vorteilhafterweise Silber oder Zinn. Gemäß einer anderen Ausführungsform umfassen die unlöslichen Anoden Titan mit einer Beschichtung. Als Beschichtung ist beispielsweise Ruthenium, Platin oder Iridium vorgesehen.

Gemäß einer bevorzugten Ausführungsform wird das Elektroplattieren der wenigstens einen Nickelausgangsschicht mit einer Stromdichte zwischen 50 und 550 A/dm², vorzugsweise zwischen 80 und 350 A/dm² und besonders vorzugsweise zwischen 80 und 220 A/dm² durchgeführt. Das Elektrolytbad enthält vorzugsweise Schwefelsäure. Der Anteil der Schwefelsäure beträgt 1 bis 20 g/l, vorzugsweise 2 bis 13 g/l und besonders vorzugsweise 4 bis 8 g/l. Zweckmäßigerweise weist das Elektrolytbad Nickelsulfat auf. Bevorzugt ist Borsäure für die Stabilisierung des pH-Wertes des Elektrolytbades vorgesehen. Der Anteil der Borsäure beträgt vorzugsweise 25 bis 80 g/l, besonders vorzugsweise 30 bis 70 g/l und ganz besonders vorzugsweise 40 bis 60 g/l. Gemäß einer bevorzugten Ausführungsform enthält das Elektrolytbad Natriumsulfat zwecks Erreichung einer höheren Leitfähigkeit. Der Anteil des Natriumsulfats beträgt bevorzugt 20 bis 70 g/l, weiter bevorzugt 30 bis 65 g/l und besonders bevorzugt 40 bis 55 g/l. Vorteilhafterweise werden keine weiteren Additive wegen eines ansonsten schlechteren Lötverhaltens in das Elektrolytbad eingeführt. Der Nickelanteil des Elektrolytbades entspricht vorteilhaft einem Wert zwischen 50 und 130 g/l, weiter vorteilhaft 70 bis 100 g/l und besonders vorteilhaft 80 bis 90 g/l. Die Flussgeschwindigkeit des Elektrolytbades beträgt vorzugsweise 1 bis 10 m/min, weiter vorzugsweise 2 bis 5 m/min und besonders vorzugsweise 2,5 bis 3,5 m/min.

Es liegt im Rahmen der Erfindung, dass das Elektroplattieren der wenigstens einen Lotausgangsschicht mit einer Stromdichte zwischen 30 und 500 A/dm², vorzugsweise zwischen 40 und 325 A/dm² und besonders vorzugsweise zwischen 40 und 200 A/dm² durchgeführt wird. Vorteilhafterweise enthält das Elektrolytbad Schwefelsäure. Weiter vorteilhafterweise beträgt der Anteil der Schwefelsäure 80 bis 120 g/l und besonders vorteilhafterweise 90 bis 110 g/l. Der Anteil des Lotes in dem Elektrolytbad wird zweckmäßigerweise an den Anteil der Schwefelsäure im Elektrolytbad angepasst. Vorzugsweise entspricht der Lotanteil demjenigen Anteil in dem Elektrolytbad, welcher maximal durch die Schwefelsäure aufgelöst werden kann. Vorzugsweise werden keine weiteren Additive in das Elektrolytbad hinzugegeben. Besonders vorzugsweise wird insbesondere keine Borsäure hinzugefügt, da der pH-Wert keiner weiteren Manipulation bedarf.

Es ist bevorzugt, dass die Lotausgangsschicht Kupfer umfasst. Vorzugsweise weist die Lotausgangsschicht wenigstens 30% Kupfer, besonders vorzugsweise wenigstens 50% Kupfer und ganz besonders vorzugsweise wenigstens 70% Kupfer auf. Gemäß einer bevorzugten Ausführungsform weist die Lotausgangsschicht wenigstens 90% Kupfer auf.

Gemäß einer besonders bevorzugten Ausführungsform wird auf beiden Seiten der Stahlausgangsschicht je eine Nickelausgangsschicht aufgebracht. Vorzugsweise werden die Nickelausgangsschichten mit einer Zelle mit konstanter Elektrolytflussgeschwindigkeit aufgetragen. Besonders vorzugsweise werden die Nickelausgangsschichten in einer Zelle mit konstanter Elektrolytflussgeschwindigkeit beidseitig aufgebracht. Ganz besonders vorzugsweise werden die beidseitig aufgebrachten Nickelausgangsschichten in einer Gravitelzelle auf die Stahlausgangsschicht aufgetragen.

Gemäß einer besonders bevorzugten Ausführungsform wird lediglich auf einer Seite der Stahlausgangsschicht die Lotausgangschicht auf der einen Nickelausgangsschicht bzw. auf einer der beiden Nickelausgangsschichten aufgebracht. Vorzugsweise bildet die lediglich eine Lotausgangsschicht beim Walzen die Innenseite des Rohres. Zweckmäßigerweise wird die Lotausgangsschicht mittels einer Radialzelle aufgetragen. Besonders bevorzugt wird die Lotausgangsschicht mit einer Mehrzahl von Radialzellen aufgetragen. Gemäß einer bevorzugten Ausführungsform wird die Lotausgangsschicht mit wenigstens zwei Radialzellen aufgebracht. Gemäß einer anderen Ausführungsform wird die Lotausgangsschicht mittels wenigstens vier Radialzellen aufgebracht.

Es ist bevorzugt, dass eine Reinigung des Stahlbandes eine Entfettung und/oder ein Beizen umfasst. Vorzugsweise ist die Entfettung zweistufig. Besonders vorzugsweise wird in einer ersten Entfettungsstufe das Stahlband in einem Laugenbad mit Bürsten entfettet. In einer zweiten Entfettungsstufe wird das Stahlband in einem Laugenbad mit Gasblasen entfettet. Es ist bevorzugt, dass nach den Teilschritten der Entfettung eine Wasserspülung, bevorzugt eine Kaskadenwasserspülung, stattfindet. Das Beizen geschieht vorteilhafterweise mit Säure und besonders vorteilhafterweise mit Schwefelsäure. Danach findet vorzugsweise eine Wasserspülung und besonders vorzugsweise eine Kaskadenwasserspülung mit vorteilhafterweise Bürsten statt.

Der Erfindung liegt die Erkenntnis zugrunde, dass Nickel als Haftvermittler für Lot auf Stahl besonders geeignet ist und die Zugabe von Zyanid in Elektrolytbädern somit vermieden werden kann. Ferner wurde gefunden, dass Nickel und Lot mittels Zellen mit der Möglichkeit einer konstanten Elektrolytflussgeschwindigkeit auch sehr wirtschaftlich aufgetragen werden kann. Dies wird insbesondere ermöglicht durch Radialzellen oder Gravitelzellen. Es wurde weiter gefunden, dass für eine besonders gute Haftvermittlung die Nickelausgangsschichten vorteilhafterweise sehr kompakt sind. Dies wird erreicht, indem sehr hohe Stromdichten angewendet werden. Bevorzugt für diese hohen Stromdichten sind unlösliche Anoden. Vorteilhaft sind auch entsprechend fein austarierte Mischungen der Elektrolytbäder. Der Erfindung liegt ferner die Erkenntnis zugrunde, dass Nickel eine sehr gute Diffusionsbarriere bildet, welche die Diffusion von Lotatomen in die Stahlausgangsschicht bzw. Stahlschicht verringert. Dadurch wird die Sprödigkeit des Stahls verringert. Das Rohr ist dadurch umso hochwertiger bei nachfolgenden Biegevorgängen. Ferner liegt der Erfindung die Erkenntnis zugrunde, dass Nickel die Eigenschaften der Korrosionsschutzbeschichtung aus Zink bzw. aus Zinklegierungen verbessert. Außerdem verringert Lot die Korrosionsschutzeigenschaften des Zinks bzw. der Zinklegierungen. Folglich ist es vorteilhaft, dass nur auf einer Seite des Metallbandes die Lotschicht die innerste Schicht des Rohres bildet. Dann befindet sich Nickel im Falle eines beidseitigen Auftragens auf der Außenhaut des Rohres.

Nachfolgend wird die Erfindung anhand einer lediglich zwei Ausführungsbeispiele darstellenden Zeichnung näher erläutert. Es zeigen in schematischer Darstellung
- **Fig. 1**: eine vereinfachte Darstellung eines Teils einer Vorrichtung zur Herstellung eines Metallbandes für ein Rohr,
- **Fig. 2**: eine detailliertere Darstellung einer Radialzelle der Vorrichtung aus Fig. 1,
- **Fig. 3**: das mit der Vorrichtung aus Fig. 1 hergestellte Metallband,
- **Fig. 4**: das aus dem Metallband der Fig. 3 hergestellte Rohr im Querschnitt,
- **Fig. 5a**: einen vergrößerten Ausschnitt der Wände des Rohres aus Fig. 4,
- **Fig. 5b**: einen vergrößerten Ausschnitt der Wände eines zweiten Rohres.

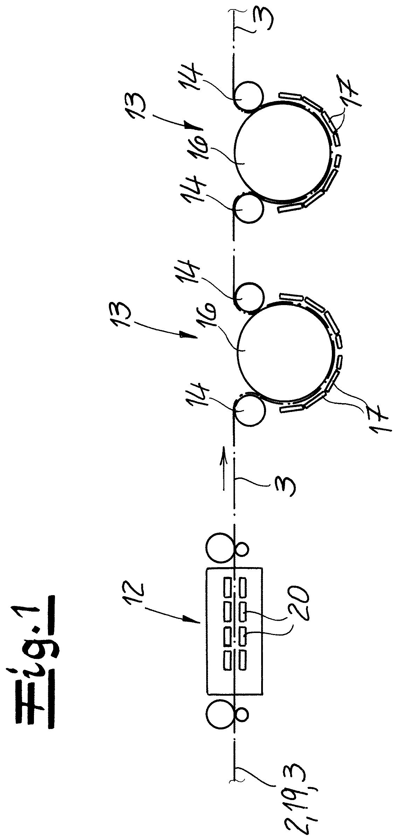

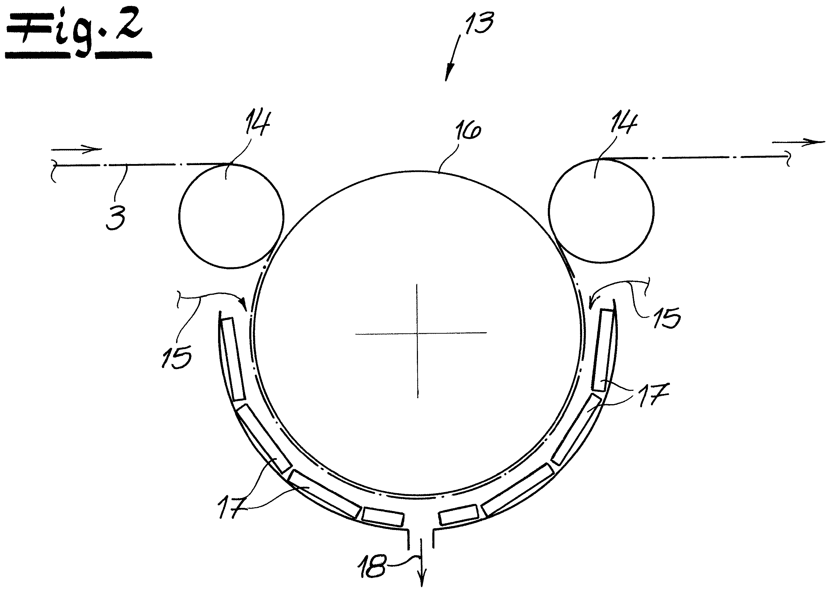

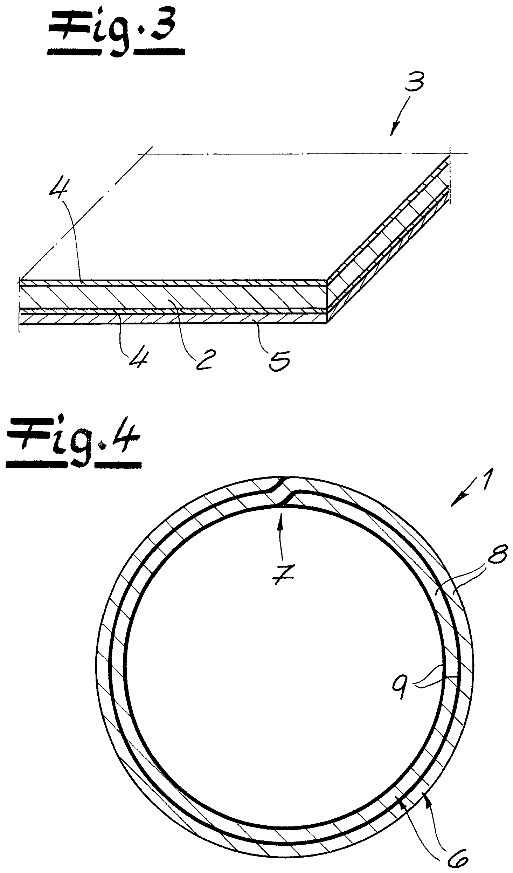

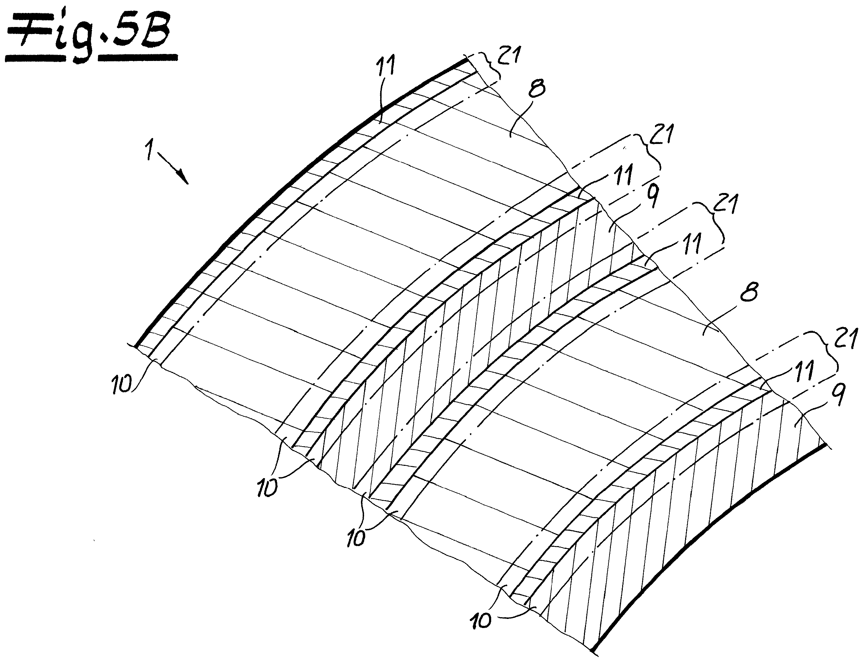

Die Fig. 1 und 2 veranschaulichen einen wesentlichen Teil des erfindungsgemäßen Verfahrens zur Herstellung der mehrwandigen Rohre 1. Die Fig. 3 bis 5a verdeutlichen den Schichtaufbau des ersten Rohres 1. Die Fig. 5b schließlich verdeutlicht den Schichtaufbau des zweiten Rohres 1.

In Fig. 1 ist ein Teil der Vorrichtung zur Herstellung eines Metallbandes 3 für die Rohre 1 ersichtlich. Als Ausgangsmaterial dient ein Stahlband 19, welches vorzugsweise eine Breite von 700 mm bis 1100 mm aufweist. Das Stahlband 19 bildet eine Stahlausgangsschicht 2 des Metallbandes 3. Die Stahlausgangsschicht 2 hat vorzugsweise eine Stärke von 300 bis 370 µm und besteht aus den weichen und gut zum Kaltumformen geeigneten Stahlsorten DC03 oder DC04.

Das Stahlband 19 wird in einem ersten Schritt gereinigt. Die Reinigung umfasst eine zweistufige Entfettung in einem Laugenbad, wobei einmal mit Bürsten und einmal mit Gasblasen eine entsprechende Fettentfernung gewährleistet wird. Zwischen den Teilschritten des Entfettens wird das Stahlband 19 einer Kaskadenspülung mit Wasser unterzogen. Nach dem Entfetten folgt das Beizen mittels Schwefelsäure, welches wiederum von einer Kaskadenwasserspülung gefolgt wird. Nach dem Reinigen ist das Stahlband 19 bereit für die Beschichtungen mit Nickel und Kupfer.

In Fig. 1 ist ersichtlich, dass das Stahlband 19 in Leserichtung zunächst durch eine Gravitelzelle 12 und danach durch zwei Radialzellen 13 läuft. Demnach wird das Metallband 3 ganz links im Bild zunächst nur durch das Stahlband 19 bzw. die Stahlausgangsschicht 2 als zunächst einzige Schicht des Metallbandes 3 gebildet. In der Gravitelzelle 12 findet eine Nickelbeschichtung statt, bei welcher beidseitig jeweils 70 bis 200 nm Nickel auf die Stahlausgangsschicht 2 aufgetragen werden. Das Metallband 3 wird somit auf jeder der beiden Flächenseiten um eine Nickelausgangsschicht 4 erweitert.

Die Gravitelzelle 12 weist bewegliche Anoden 20 auf. Die beweglichen Anoden 20 sind unlöslich, bestehen aus einer Blei-Zinn-Legierung und sind in ein Elektrolytbad eingetaucht. Die Stromdichten im Elektrolytbad liegen vorzugsweise zwischen 80 und 220 A/dm². Das Elektrolytbad enthält Schwefelsäure, wobei die Schwefelsäure 4 bis 8 g/l des Elektrolytbades entspricht. Ferner wird dem Elektrolytbad Borsäure hinzugegeben. Der Anteil der Borsäure an dem Elektrolytbad entspricht 40 bis 60 g/l. Außerdem findet sich in dem Elektrolytbad ein Anteil von 40 bis 55 g/l Natriumsulfat. Weitere Additive sind nicht enthalten. Der Nickelanteil des Elektrolytbades beträgt zwischen 80 und 90 g/l. Die Flussgeschwindigkeit des Elektrolytbades ist so eingestellt, dass 2,5 bis 3,5 m/min erreicht werden.

Nach der Gravitelzelle 12 läuft das Metallband 3 weiter zu den zwei Radialzellen 13, welche in zwei Schritten auf der Unterseite des Metallbandes 3 eine Lotausgangsschicht 5 mit wenigstens 90% Kupfer auftragen. Die Gesamtstärke der Lotausgangsschicht 5 beträgt nach der zweiten Radialzelle 13 vorzugsweise 4 bis 6 µm. Zur Verdeutlichung der Radialzellen 13 ist in Fig. 2 eine vergrößerte Abbildung einer solchen Radialzelle 13 dargestellt. Das Metallband 3, enthaltend eine Stahlausgangsschicht 2 und zwei Nickelausgangsschichten 4, läuft links oben in der Figur zunächst um eine Ablenkrolle 14 herum und wird dann auf eine Kontakttrommel 16 geführt. Kurz nach dem Kontakt mit der Kontakttrommel 16 wird das Elektrolytbad an einem ersten Elektrolytbadeinlass 15 in die Radialzelle 13 eingeführt. Aufgrund des Kontaktes mit der Kontakttrommel 16 kommt dabei nur die Unterseite des Metallbandes 3 mit dem Elektrolytbad in Berührung. Unlösliche Anoden 17 lassen den Strom der Lotionen zur Unterseite des Metallbandes 3 hin fließen. Die Anoden 17 sind dabei so ausgerichtet, dass der Abstand zur Kontakttrommel 16 und damit zur Unterseite des Metallbandes 3 stets in etwa gleichbleibend ist. An der tiefsten Stelle der Radialzelle 13 befindet sich ein Elektrolytbadauslass 18, an welchem der mittlerweile verhältnismäßig an Lotionen arme Elektrolyt der Radialzelle 13 entnommen und in einer nicht dargestellten Vorrichtung wieder mit Lotionen angereichert wird. Danach läuft das Metallband 3 relativ zum Elektrolytbad im Gegenstrom zunächst an einem zweiten Elektrolytbadeinlass 15 vorbei und wird dann über eine zweite Ablenkrolle 14 aus der Radialzelle 13 herausgeführt. Dieser Vorgang wiederholt sich bei der zweiten Radialzelle 13 und schließt das Aufbringen der Lotausgangsschicht 5 ab.

In den Radialzellen 13 liegen sehr hohe Stromdichten zwischen 40 und 200 A/dm² vor. Die Anoden 17 sind unlöslich und umfassen eine Blei-ZinkLegierung. Das Elektrolytbad enthält 90 bis 110 g/l Schwefelsäure sowie Lot bis zur maximalen Löslichkeit. Weitere Additive, beispielsweise Borsäure, sind nicht enthalten. Nach den Teilschritten der Lotbeschichtung wird das Metallband 3 gespült. Die Herstellung des Metallbandes 3 ist dann abgeschlossen.

Das Metallband 3 ist zur Verdeutlichung in Fig. 3 perspektivisch geschnitten abgebildet. Gut ersichtlich sind die Stahlausgangsschicht 2 mit einer Stärke von 300 bis 370 µm, die daran angrenzenden Nickelausgangsschichten 4 mit Stärken von 70 bis 200 nm sowie die Lotausgangsschicht 5 auf der Unterseite des Metallbandes 3 mit einer Stärke von 4 bis 6 µm. Aufgrund der großen Unterschiede zwischen den Stärken der einzelnen Schichten ist das Metallband in Fig. 3 nicht maßstabsgetreu abgebildet.

Das Metallband 3 wird in weiteren Verfahrensschritten in Abschnitte unterteilt, welche mittels Walzen zusammengerollt werden. Im vorliegenden Ausführungsbeispiel werden die Abschnitte mittels Walzen zweifach aufgerollt, so dass das Rohr 1 zwei Wände 6 aufweist. Nach dem Walzen wird das Rohr mittels eines Induktionsofens erhitzt, wodurch die Lotausgangsschicht 5 schmilzt. Auf diese Weise werden die beiden Wände 6 miteinander verlötet und das Rohr 1 so abgedichtet. Aufgrund der zweifachen Umwicklung sowie aufgrund des Diffusionsprozesses der Nickel-, Eisen- und Lotatome wird nach dem Löten nicht mehr von den Ausgangsschichten 2, 4, 5 gesprochen, sondern nur noch von Stahlschichten 8 und Lotschichten 9 (s. Fig. 4). Aufgrund der Zweiwandigkeit des Rohres 1 liegen zwei Stahlschichten 8 und zwei Lotschichten 9 vor. Beim Walzen wurde darauf geachtet, dass die Lotausgangsschicht 5 die zukünftige Innenseite des Rohres 1 bildet. Demzufolge bildet nach dem Verlöten eine innere Lotschicht 9 die innerste Schicht des Rohres 1, gefolgt von einer inneren Stahlschicht 8, gefolgt von einer äußeren Lotschicht 9 und schließlich gefolgt von einer äußeren Stahlschicht 8. An einer Nahtstelle 7 sind die Enden des Metallbandabschnittes zusammengefügt.

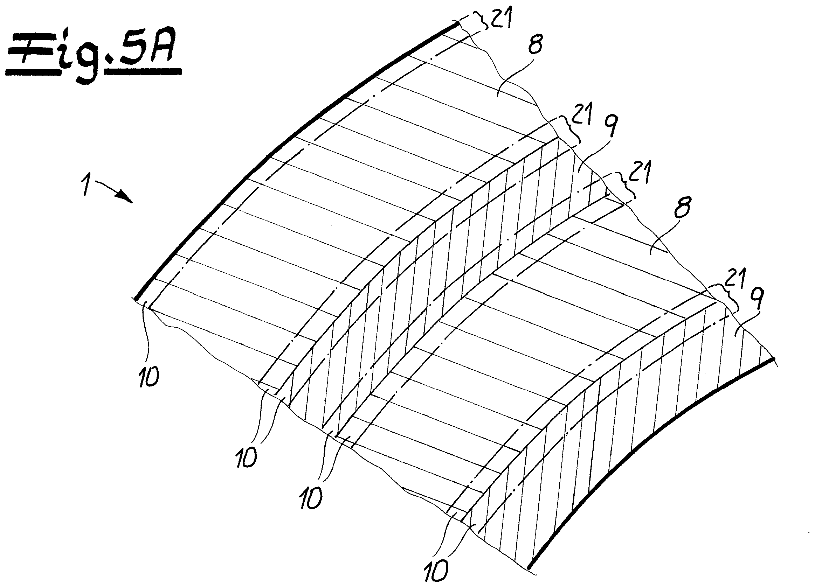

Dies ist zur Verdeutlichung in einer vergrößerten Abbildung eines Wandausschnittes des Rohres 1 in Fig. 5a gut zu erkennen. Aufgrund der Diffusion des Lötvorgangs hat sich im Ausführungsbeispiel gemäß Fig. 5a das Nickel der Nickelausgangsschicht 4 auch in der Stahlausgangsschicht 2 und in der Lotausgangsschicht 5 ausgebreitet. Die scharfe Schichtstruktur wurde durch das Verlöten somit aufgelöst, weshalb nun nur noch in etwa gaußförmige Verteilungen des Nickels an den Grenzflächen zwischen den Stahlschichten 8 und den Lotschichten 9 vorliegen. Der der Fig. 5a zugrundeliegende Lötvorgang hat auch zu einer Diffusion von Eisen- und Lotatomen in die ursprüngliche Nickelausgangsschicht 4 geführt. Daher ist der Begriff "Stahlschicht" so definiert, dass eine Stahlschicht immer dann vorliegt, wenn der Anteil des Stahls größer ist als der des Lotes. Der Begriff "Lotschicht" ist analog definiert. Es finden sich im Ausführungsbeispiel der Fig. 5a in allen Bereichen der ursprünglichen Nickelausgangsschicht 4 Eisen- und/oder Lotatome. Diese Bereiche 10 werden den Stahlschichten 8 bzw. den Lotschichten 9 zugerechnet und als Bereiche 10 mit ansteigender Nickelkonzentration zu den Grenzflächen hin bezeichnet. Die Grenzflächen werden dadurch definiert, dass auf der einen Seite die Konzentration der Eisenatome größer als die der Lotatome ist.

Im zweiten Ausführungsbeispiel (s. Fig. 5b) wurde der Lötvorgang mit geringeren Wärmeenergiemengen durchgeführt, so dass nicht in allen Bereichen der ursprünglichen Nickelausgangsschicht 4 Fremdatome eingedrungen sind. In diesem Fall blieb die ursprüngliche Nickelausgangsschicht 4 in Form von Nickelschichten 11 mit einer 100%igen Konzentration von Nickel erhalten. Die angrenzenden Bereiche 10 sind diejenigen Bereiche, welche den Stahlschichten 8 bzw. den Lotschichten 9 zugerechnet werden und zugleich Nickel enthalten. In diesen Bereichen 10 liegt eine zu den Nickelschichten 11 hin ansteigende Nickelkonzentration vor. Die Bereiche 10 mit ansteigender Nickelkonzentration und/oder die Nickelschichten 11 bilden nickelhaltige Bereiche 21.

Schließlich sind auch Mischformen der Ausführungsbeispiele der Fig. 5a und 5b denkbar. Beispielsweise wird bei einigen Lötverfahren vor allem der äußere Bereich des Rohres 1 erwärmt. Dort ist die Diffusion entsprechend stärker ausgeprägt, so dass im äußeren Bereich der Wände 6 keine Nickelschichten 11, aber dafür umso ausgedehntere Bereiche 10 mit ansteigenden Nickelkonzentrationen vorliegen. In einem inneren Abschnitt des Rohres 1 hingegen blieb die Nickelausgangsschicht 4 in Form von Nickelschicht/en 11 erhalten, allerdings mit umso geringeren Ausdehnungen der angrenzenden Bereiche 10.

## Patentansprüche

1. Verfahren zur Herstellung von mehrwandigen Rohren (1), wobei ein Stahlband (19) eine Stahlausgangsschicht (2) eines Metallbandes (3) bildet,
wobei wenigstens auf einer Seite der Stahlausgangsschicht (2) eine Nickelausgangsschicht (4) mittels Elektroplattierens aufgebracht wird,
wobei wenigstens eine Lotausgangsschicht (5) auf der einen Nickelausgangsschicht (4) oder einer der beiden oder beiden Nickelausgangsschichten (4) aufgebracht wird,
wobei aus dem Metallband (3) bzw. aus Abschnitten des Metallbandes (3) mittels Aufrollens die mehrwandigen Rohre geformt werden und
wobei die Wände der Rohre (1) mittels Erhitzen verlötet werden,
**dadurch gekennzeichnet, dass**
die Stärke der Nickelausgangsschicht (4) 40 nm bis 800 nm beträgt.

2. Verfahren nach Anspruch 1, wobei die Lotausgangsschicht (5) mittels Elektroplattierens aufgebracht wird bzw. werden.

3. Verfahren nach Anspruch 2, wobei das Elektroplattieren der wenigstens einen Nickelausgangsschicht (4) und/oder der wenigstens einen Lotausgangsschicht (5) in wenigstens einer Zelle (13, 14) mit der Möglichkeit einer konstanten Elektrolytflussgeschwindigkeit vorgenommen wird.

4. Verfahren nach Anspruch 2 oder 3, wobei das Elektroplattieren der wenigstens einen Lotausgangsschicht (5) in wenigstens einer Radialzelle (13) vorgenommen wird.

5. Verfahren nach einem der Ansprüche 2 bis 4, wobei das Elektroplattieren der wenigstens einen Nickelausgangsschicht (4) und/oder der wenigstens einen Lotausgangsschicht (5) mit Hilfe von unlöslichen Anoden durchgeführt wird.

6. Verfahren nach einem der Ansprüche 2 bis 5, wobei das Elektroplattieren der wenigstens einen Nickelausgangsschicht (4) mit einer Stromdichte zwischen 50 und 550 A/dm², vorzugsweise zwischen 80 und 350 A/dm² und besonders vorzugsweise zwischen 80 und 220 A/dm² durchgeführt wird.

7. Verfahren nach einem der Ansprüche 2 bis 6, wobei das Elektroplattieren der wenigstens einen Lotausgangsschicht (5) mit einer Stromdichte zwischen 30 und 500 A/dm², vorzugsweise zwischen 40 und 325 A/dm² und besonders vorzugsweise zwischen 40 und 200 A/dm² durchgeführt wird.

8. Verfahren nach einem der Ansprüche 1 bis 7, wobei die Lotausgangsschicht (5) Kupfer umfasst.

9. Verfahren nach einem der Ansprüche 1 bis 8, wobei auf beiden Seiten der Stahlausgangsschicht (2) je eine Nickelausgangsschicht (4) aufgebracht wird.

10. Verfahren nach einem der Ansprüche 1 bis 9, wobei lediglich auf einer Seite der Stahlausgangsschicht (2) die Lotausgangschicht (5) auf der einen Nickelausgangsschicht (4) bzw. auf einer der beiden Nickelausgangsschichten (4) aufgebracht wird und wobei vorzugsweise die lediglich eine Lotausgangsschicht (5) die Innenseite der Rohre (1) bildet.

## Claims

1. A method for manufacturing multiwalled pipes (1), wherein a steel band (19) forms a steel base layer (2) of a metal band (3),
wherein a nickel base layer (4) is applied to one side of the steel base layer (2) via electroplating,
wherein at least one braze base layer (5) is applied to the one nickel base layer (4) or one of the two or both nickel base layers (4),
wherein the multiwalled pipes are formed out of the metal band (3) or out of sections of the metal band (3) via rolling,
wherein the walls of the pipes (1) are brazed via heating,
**characterized in that**
the thickness of the nickel base layer (4) measures 40 nm to 800 nm.

2. The method according to claim 1, wherein the braze base layer (5) is/are applied via electroplating.

3. The method according to claim 2, wherein the at least one nickel base layer (4) and/or the at least one braze base layer (5) are electroplated in at least one cell (13, 14) with the possibility of a constant electrolyte flow rate.

4. The method according to claim 2 or 3, wherein the at least one braze base layer (5) is electroplated in at least one radial cell (13).

5. The method according to one of claims 2 to 4, wherein the at least one nickel base layer (4) and/or the at least one braze base layer (5) is electroplated with the help of insoluble anodes.

6. The method according to one of claims 2 to 5, wherein the at least one nickel base layer (4) is electroplated with a current density of between 50 and 550 A/dm², preferably of between 80 and 350 A/dm², and especially preferably of between 80 and 220 A/dm².

7. The method according to one of claims 2 to 6, wherein the at least one braze base layer (5) is electroplated with a current density of between 30 and 500 A/dm², preferably of between 40 and 325 A/dm², and especially preferably of between 40 and 200 A/dm².

8. The method according to one of claims 1 to 7, wherein the braze base layer (5) comprises copper.

9. The method according to one of claims 1 to 8, wherein a respective nickel base layer (4) is applied on both sides of the steel base layer (2).

10. The method according to one of claims 1 to 9, wherein the braze base layer (5) is applied to the one nickel base layer (4) or to one of the two nickel base layers (4) only on one side of the steel base layer (2), and wherein the only one braze base layer (5) forms the interior side of the pipe (1).

## Revendications

1. Procédé de réalisation de tuyaux à parois multiples (1), sachant qu'une bande d'acier (19) forme une couche initiale d'acier (2) d'une bande métallique (3),
sachant qu'une couche initiale de nickel (4) est appliquée au moins sur un côté de la couche initiale d'acier (2) par électrodéposition,
sachant qu'au moins une couche initiale de brasage (5) est appliquée sur une couche initiale de nickel (4) ou sur une des deux ou les deux couches initiales de nickel (4) ,
sachant que les tuyaux à parois multiples sont formés à partir de la bande métallique (3) ou de la découpe de la bande métallique (3) par enroulement et
sachant que les parois des tuyaux (1) sont brasées par échauffement,
**caractérisé en ce que**
l'épaisseur de la couche initiale de nickel (4) est de 40 nm à 800 nm.

2. Procédé selon la revendication 1, sachant que la(es) couche(s) initiale(s) de brasage (5) est ou sont appliquée(s) par électrodéposition.

3. Procédé selon la revendication 2, sachant que l' électrodéposition d'au moins une couche initiale de nickel (4) et/ou d'au moins une couche initiale de brasage (5) est pratiquée dans au moins une cellule (13, 14) avec la possibilité d'une vitesse de flux électrolytique constante.

4. Procédé selon la revendication 2 ou 3, sachant que l'électrodéposition d'au moins une couche initiale de brasage (5) est pratiquée dans au moins une cellule radiale (13).

5. Procédé selon l'une quelconque des revendications 2 à 4, sachant que l'électrodéposition d'au moins une couche initiale de nickel (4) et/ou d'au moins une couche initiale de brasage (5) est exécutée à l'aide d'anodes insolubles.

6. Procédé selon l'une quelconque des revendications 2 à 5, sachant que l'électrodéposition d'au moins une couche initiale de nickel (4) est exécutée avec une densité de courant se situant entre 50 et 550 A/dm², de préférence entre 80 et 350 A/dm² et en particulier de préférence entre 80 et 220 A/dm².

7. Procédé selon l'une quelconque des revendications 2 à 6, sachant que l'électrodéposition d'au moins une couche initiale de brasage (5) est exécutée avec une densité de courant se situant entre 30 et 500 A/dm², de préférence entre 40 et 325 A/dm² et en particulier de préférence entre 40 et 200 A/dm².

8. Procédé selon l'une quelconque des revendications 1 à 7, sachant que la couche initiale de brasage (5) comprend du cuivre.

9. Procédé selon l'une quelconque des revendications 1 à 8, sachant qu'une couche initiale de nickel (4) est respectivement appliquée aux deux côtés de la couche initiale d'acier (2).

10. Procédé selon l'une quelconque des revendications 1 à 9, sachant que la couche initiale de brasage (5) est appliquée sur une couche initiale de nickel (4) ou sur une des deux couches initiales de nickel (4) uniquement sur un côté de la couche initiale d'acier (2) et sachant que seulement une couche initiale de brasage (5) forme de préférence le côté intérieur des tuyaux (1).
